# EUROPÄISCHE PATENTANMELDUNG

(11) **EP 1 743 754 A2**
(43) Veröffentlichungstag der Anmeldung: **17.01.2007**
(21) Anmeldenummer: 06010134.2
(22) Anmeldetag: 17.05.2006
(51) Int. Cl.: B28D 1/14

(54) **Bohrer**

(30) Priorität: 13.07.2005 DE 102005032680
(71) Anmelder: fischerwerke Artur Fischer GmbH & Co. KG, 72178 Waldachtal (DE)
(72) Erfinder: Schäffer, Marc, 72160 Horb-Bildechingen (DE); Hacker, Oliver, 72160 Horb (DE); Zürn, Alexander, 88361 Altshausen (DE)
(74) Vertreter: Suchy, Ulrich Johannes

(57) **Zusammenfassung**

Die Erfindung betrifft einen Bohrer (1) zum Einbringen eines hinterschnittenen Bohrlochs in einem Untergrund mit einem Kopfabschnitt (2) mit mindestens einer Schneidplatte (10, 11), einem sich hieran anschließenden schmaleren Halsabschnitt (3) sowie einer Ausbauchung (5). Um einen derartigen Bohrer zu schaffen, dessen Stabilität im Bereich des Halsabschnitts verbessert (3) ist, schlägt die Erfindung vor, dass der Bohrer (1) mindestens eine Hauptschneidplatte (10), welche den Kopfabschnitt (2) mittig durchsetzt, und mindestens eine Nebenschneidplatte (11) aufweist, und dass die Nebenschneidplatte (11) weiter zum Halsabschnitt (3) ragt als die Hauptschneidplatte (10).

## Beschreibung

Die Erfindung betrifft einen Bohrer zum Einbringen eines hinterschnittenen Bohrlochs in einem Untergrund mit den Merkmalen des Oberbegriffs des Anspruchs 1.

Derartige Bohrer sind beispielsweise aus der Druckschrift EP 0 891 832 B1 bekannt. Sie dienen insbesondere der Erstellung von Bohrlöchern in Beton, in denen Anker formschlüssig verankert werden. Gegenüber Ankern, die kraftschlüssig durch Verspreizen einer Spreizhülse in einem zylindrischen Bohrloch verankert werden, können hierdurch bei ähnlichen Abmessungen deutlich höhere Haltewerte erreicht werden. Der bekannte Bohrer sieht einen Kopfabschnitt mit mindestens einer Schneidplatte vor, einen sich hieran anschließenden Halsabschnitt sowie einen Schaftabschnitt mit einer Ausbauchung und einer Bohrmehlnut. Hieran schließt sich ein Anschlagtopf sowie Befestigungsmittel zum Einspannen in eine Bohrmaschine an. Zur Erstellung einer hinterschnittenen Bohrung wird der eingespannte Bohrer zunächst senkrecht zur Oberfläche des Untergrundes geführt und hierdurch eine zylindrische Bohrung erstellt. Sobald der Anschlagtopf auf dem Untergrund aufsitzt, wird der Bohrer verschwenkt und in dieser verschwenkten Stellung kreisförmig um die Achse des zylindrischen Bohrlochs geführt. Die Ausbauchung wirkt dabei als Schwenklager, so dass der Kopfabschnitt mit der Schneidplatte am Bohrlochgrund eine konische Hinterschneidung erstellt.

Bereits in der Druckschrift EP 0 891 832 B1 wird diskutiert, dass im Bereich des Halsabschnitts sehr große Biegemomente während der Herstellung der Hinterschneidung wirken. Um der Gefahr des Bohrerbruchs im Bereich des Halsabschnitts entgegenzuwirken, schlägt die Druckschrift daher vor, die Schneidplatte an ihrem hinteren Rand mit einem konkaven Verlauf zu versehen sowie den Grund des entsprechenden Querschlitzes im Bohrerschaft komplementär zu diesem konkaven Rand auszubilden. Aufgrund der immer leistungsstärkeren Bohrmaschinen bzw.

Bohrhämmer hat sich jedoch auch diese Maßnahme in jüngerer Zeit als nicht ausreichend erwiesen.

Es ist daher Aufgabe der Erfindung, die Stabilität des bekannten Bohrers im Bereich des Halsabschnitts weiter zu verbessern.

Diese Aufgabe wird erfindungsgemäß durch die Merkmale des Anspruchs 1 gelöst. Die Erfindung sieht vor, dass der Bohrer neben einer Hauptschneidplatte, welche den Kopfabschnitt mittig durchsetzt, mindestens eine, vorzugsweise zwei, Nebenschneidplatten aufweist. Dies entspricht einer Funktionentrennung. Während die Hauptschneidplatte im Wesentlichen der Erstellung des zylindrischen Teils der Bohrung dient, übernimmt die Nebenschneidplatte das Ausfräsen der Hinterschneidung. Hiermit geht einher, dass die Nebenschneidplatte weiter zum Halsabschnitt ragt als die Hauptschneidplatte. Zwar könnte auch die Hauptschneidplatte bis zum Halsabschnitt ragen, doch ist dies aufgrund ihrer Funktion nicht notwendig. Eine mittige vollständige Durchsetzung des Kopfabschnitts durch den Schlitz für die Hauptschneidplatte erfolgt somit nur im vorderen, dem Halsabschnitt abgewandten Teil des Kopfabschnitts. Die Nebenschneidplatte braucht dagegen nur in einem Schlitz im radialen Randbereich des Kopfabschnitts befestigt werden. Hierdurch kann bei vergleichbaren Abmessungen die Stabilität gegenüber dem Stand der Technik deutlich erhöht werden.

Für die Hauptschneidplatte kann eine im Wesentlichen zweidimensionale Form gewählt werden, d.h. beispielsweise ein Hartmetallplättchen mit zwei dem Bohrlochgrund zugewandten Hauptschneidkanten, die jeweils vom Bohrerzentrum ausgehen. Daneben sind aber auch Hauptschneidplatten mit drei oder mehr Hauptschneidkanten denkbar, die beispielsweise sternförmig um das Bohrerzentrum herum angeordnet sind.

Im Sinne der genannten Funktionentrennung ist die Nebenschneidplatte in einer bevorzugten Ausführung axial gegenüber der Hauptschneidplatte zurückgesetzt. Damit kommt beim ersten Bohrabschnitt, dem Erstellen der zylindrischen Bohrung, im Wesentlichen nur die axial vorragende Hauptschneidplatte in Berührung mit dem Bohrlochgrund. Aufgrund des den Kopfabschnitt mittig durchsetzenden Schlitzes kann die Hauptschneidplatte die damit einhergehenden axialen Stöße besonders gut auf den Bohrkörper übertragen. Da die Nebenschneidplatten lediglich im radialen Randbereich des Kopfabschnitts angebunden sind, können sie diese Aufgabe weniger gut übernehmen. Jedoch kommt ihnen gleichzeitig eine wesentliche Bedeutung bei der Zentrierung des Bohrers zu, wie sie insbesondere beim Auftreffen auf Bewehrungsstahl in Stahlbeton von Bedeutung ist. Um diese Funktion bestmöglich erfüllen zu können, sind vorzugsweise zwei Nebenschneidplatten jeweils senkrecht zur Hauptschneidplatte angeordnet. Mit ihren Nebenschneiden stützen sie sich während der Erstellung des zylindrischen Teils des Bohrlochs radial an der Bohrlochwand ab.

Die Erfindung wird nachfolgend anhand eines in der Zeichnung dargestellten Ausführungsbeispiels näher erläutert. Es zeigen:
- Figur 1: einen erfindungsgemäßen Bohrer in perspektivischer Darstellung;
- Figur 2: eine Schnittdarstellung desselben Bohrers entsprechend der in Figur 1 dargestellten Schnittebene II; und
- Figur 3: eine weitere Schnittdarstellung desselben Bohrers entsprechend der in Figur 1 dargestellten Schnittebene III.

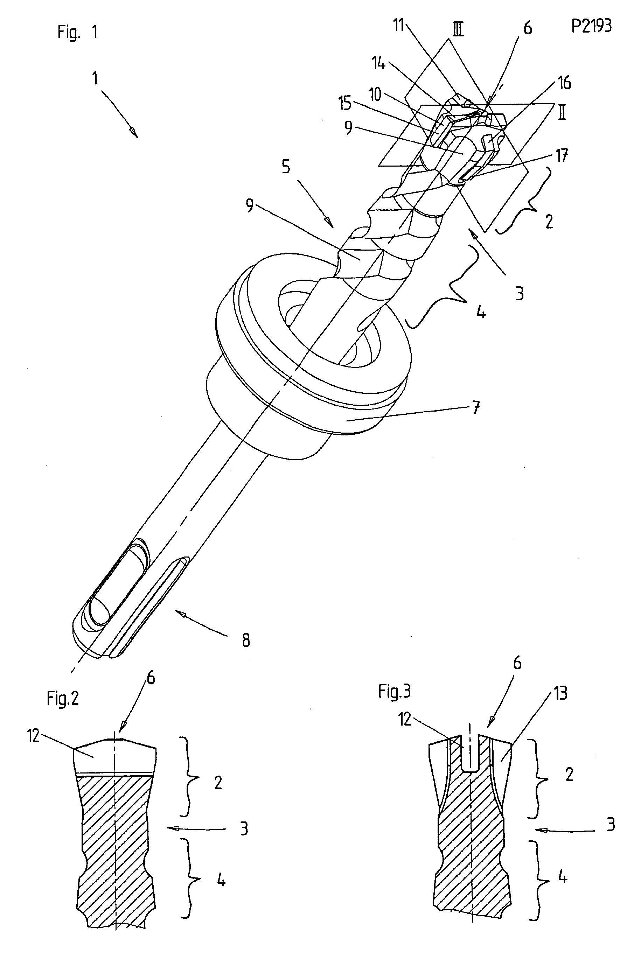

Der in den Figuren 1-3 dargestellte erfindungsgemäße Bohrer 1 weist einen Kopfabschnitt 2, einen sich hieran anschließenden Halsabschnitt 3 sowie einen Schaftabschnitt 4 mit einer Ausbauchung 5 auf. An diese Abschnitte, die für die eigentliche Bohrlocherstellung ausgebildet sind, schließt sich in axialer Richtung entgegen der Bohrerspitze 6 ein axial fixierter, drehbar gelagerter Anschlagtopf 7 an sowie Befestigungsmittel 8 zum Einspannen in eine nicht dargestellte Bohrmaschine an.

Der Kopfabschnitt 2 ist insgesamt konisch mit einem sich in Richtung der Bohrerspitze 6 erweiternden Durchmesser. Er weist Bohrmehlnuten 9 auf, die sich bis über den Halsabschnitt 3 in den Schaftabschnitt 4 fortsetzen. In den Kopfabschnitt 2 ist eine Hauptschneidplatte 10, sowie zwei Nebenschneidplatten 11 eingesetzt. Sie bestehen bspw. aus Hartmetall und sind in die in den Figuren 2 und 3 dargestellten, axial verlaufende Schlitze 12, 13 eingelötet. Dabei durchsetzt der Schlitz 12 für die Hauptschneidplatte 10 den Kopfabschnitt 2 mittig, jedoch nur in der Bohrerspitze 6 zugewandten Hälfte des Kopfabschnitts 2. Der Übersicht halber sind in den Figuren 2 und 3 jeweils nur die Schlitze 12, 13 dargestellt, während die Haupt- und Nebenschneidplatten 10, 11 nicht gezeichnet sind. Figur 3 zeigt deutlich, dass die Nebenschneidplatten 11 in Schlitzen 13 befestigt sind, die nur im radialen Randbereich des Kopfabschnitts 2 verlaufen, jedoch bis etwa zum Halsabschnitt 3 gezogen sind. Die Hauptschneidplatte 10 weist zwei jeweils von der Bohrerspitze 6 ausgehende Hauptschneidkanten 14 sowie eine radial angeordnete, sich an die Hauptschneidkante 14 jeweils anschließende Seitenschneidkante 15 auf. Die Nebenschneidplatten 11 wiederum weisen eine in Richtung der Bohrerspitze 6 weisende Vorderschneidkante 16 sowie eine sich hieran anschließende, radial angeordnete Nebenschneidkante 17 auf. Die Vorderschneidkanten 16 der Nebenschneidplatten 11 sind gegenüber den Hauptschneidkanten 14 der Hauptschneidplatte 10 axial entgegen der Richtung der Bohrerspitze 6 zurückversetzt.

Zur Erstellung eines Bohrlochs mit dem erfindungsgemäßen Bohrer 1 wird dieser in eine nicht dargestellte Bohrmaschine bzw. einen Bohrhammer mit den Befestigungsmitteln 8, die einer normierten Geometrie entsprechen, eingespannt. Unter einer Drehbewegung, die insbesondere bei Beton durch eine schlagende Bewegung überlagert wird, wird der Bohrer mit der Bohrerspitze 6 voran in den Untergrund getrieben. Dabei steht die Bohrerlängsachse senkrecht zur Oberfläche des Untergrunds. Hierdurch wird zunächst ein zylindrisches Bohrloch erstellt. Im Wesentlichen sind dabei die Hauptschneidkanten 14 der Hauptschneidplatte 10 im Einsatz. Sie zertrümmern das Material auf dem Bohrlochgrund des Ankergrunds und räumen dieses Material durch die Drehbewegung des Bohrers in Richtung der Bohrmehlnuten 9, durch die das Material aus dem Bohrloch befördert wird. Sowohl die Seitenschneidkanten 15 der Hauptschneidplatte 10 als auch die Nebenschneidkanten 17 der Nebenschneidplatte 11 stützen den Bohrer 1 beim axialen Vortrieb in radialer Richtung an der Bohrlochwand ab. Dies verhindert, dass der Bohrer 1 bspw. beim Auftreffen auf einen Bewehrungsstab in radialer Richtung abgedrängt wird, was zur Folge hätte, dass das Bohrloch erheblich von der zylindrischen Form abweichen würde.

Sobald der Bohrer 1 mit dem Anschlagtopf 17 auf der Oberfläche des Untergrunds aufsitzt, kann der Bediener mit dem Ausfräsen der konischen Hinterschneidung im Bereich des Bohrlochgrunds beginnen. Hierzu wird der Bohrer 1 gegenüber der Längsachse des zylindrischen Bohrlochs verschwenkt und in dieser verschwenkten Lage kreisförmig um die Längsachse geführt. Da die Ausbauchung 5 im Schaftabschnitt 4 den größten Durchmesser aufweist, wirkt sie als Schwenklager innerhalb des zylindrischen Bohrlochs. Damit kommt es zum Ausfräsen der Hinterschneidung durch die Seitenschneidkanten 15 der Hauptschneidplatte 10 und die Nebenschneidkanten 17 der Nebenschneidplatte 11. Da die Nebenschneidkanten 17 in axialer Richtung deutlich länger sind, übernehmen sie den Hauptteil der Ausfräsung. Abschließend wird der Bohrer 1 aus dem Bohrloch gezogen und das Bohrloch ggf. ausgeblasen.

Insgesamt übernimmt die Hauptschneidplatte 10 im Wesentlichen den zylindrischen Teil der Bohrung und damit die axiale Belastung des Bohrers. Aufgrund der relativ kurzen axialen Länge der Hauptschneidplatte 10 werden die entsprechenden Stöße im vorderen Bereich des Kopfabschnitts 2 eingeleitet, wodurch der Halsabschnitt 3 frei von Schlitzen zur Befestigung von Schneidplatten bleibt. Die Nebenschneidplatten 11 übernehmen dagegen weitgehend das Ausfräsen der konischen Hinterschneidung des Bohrlochs, brauchen jedoch nur in einem radialen Randbereich des Kopfabschnitts 2 verankert werden, da sie im Wesentlichen nur in Umfangsrichtung des Bohrers 1 wirkende Kräfte aufnehmen müssen.

Gegenüber dem Stand der Technik weist der Bohrer 1 eine deutlich verbesserte Stabilität und damit Lebensdauer auf, bei gleichzeitig sehr guten Eigenschaften in Bezug auf Bohrgeschwindigkeit und Reproduzierbarkeit der gewünschten Bohrlochgeometrie.

## Patentansprüche

1. Bohrer (1) zum Einbringen eines hinterschnittenen Bohrlochs in einem Untergrund mit einem Kopfabschnitt (2) mit mindestens einer Schneidplatte (10, 11), einem sich hieran anschließenden schmaleren Halsabschnitt (3) sowie einer Ausbauchung (5), **dadurch gekennzeichnet, dass** der Bohrer (1) mindestens eine Hauptschneidplatte (10), welche den Kopfabschnitt (2) mittig durchsetzt, und mindestens eine Nebenschneidplatte (11) aufweist, und dass die Nebenschneidplatte (11) weiter zum Halsabschnitt (3) ragt als die Hauptschneidplatte (10).

2. Bohrer nach Anspruch 1, **dadurch gekennzeichnet, dass** der Bohrer (1) genau eine Hauptschneidplatte (10) und zwei Nebenschneidplatten (11) aufweist.

3. Bohrer nach Anspruch 1, **dadurch gekennzeichnet, dass** die Nebenschneidplatte (11) mit ihrem der Bohrerspitze (6) zugewandten Ende axial gegenüber der Hauptschneidplatte (10) entgegen der Richtung der Bohrerspitze (6) versetzt ist.

4. Bohrer nach Anspruch 2, **dadurch gekennzeichnet, dass** die Nebenschneidplatten (11) senkrecht zur Hauptschneidplatte (10) angeordnet sind.
